# EUROPEAN PATENT APPLICATION

(11) **EP 4 458 488 A1**
(43) Date of publication of application: **06.11.2024**
(21) Application number: 22915703.7
(22) Date of filing: 13.12.2022
(51) Int. Cl.: B21D 28/04, B21D 28/24, B21D 28/34

(54) **PROCESSING DEVICE, METHOD FOR MANUFACTURING METAL MEMBER, AND METAL MEMBER**

(30) Priority: 28.12.2021 JP 2021213916
(71) Applicant: NIPPON STEEL CORPORATION, Chiyoda-ku Tokyo 100-8071 (JP)
(72) Inventor: NORITA, Katsunari, Tokyo 100-8071 (JP); NISHIJIMA, Shinnosuke, Tokyo 100-8071 (JP)
(74) Representative: Zimmermann & Partner Patentanwälte mbB
(86) International application number: PCT/JP2022/045768
(87) International publication number: WO 2023/127479

(57) **Abstract**

A processing apparatus capable of manufacturing a metallic member with improved corrosion resistance at its cut edge surface is provided. A processing apparatus (20) includes a punch (21) and a die (22) to be positioned on one side and the other side of a workpiece constituted by a metal sheet (10), the one and the other sides being arranged in the sheet-thickness direction, each of the punch (21) and the die (22) includes an end face (211), (221) and a side face (212), (222), the punch (21) and the die (22) are positioned such that the end face (211) of the punch (21) and the end face (221) of the die (22) do not overlap in plan view, at least one of the side face (212) of the punch (21) and the side face (222) of the die (22) includes an inclined portion (212a) providing a surface inclined to face the metal sheet (10) and shaped to overlap the other one of the punch (21) and the die (22) in plan view, and the surface provided by the inclined portion (212a) and the sheet-thickness direction form an angle θ not smaller than 15°.

## Description

### TECHNICAL FIELD

The present invention relates to a processing apparatus, a method of manufacturing a metallic member, and a metallic member.

### BACKGROUND ART

Steel members for automobiles and buildings are usually manufactured by press working. To produce a steel member required to have corrosion resistance, material in the form of cold-rolled steel sheet or hot-rolled steel sheet is pressed and then provided with paint and/or plating. Having painting and/or plating steps after pressing increases work time and/or costs.

To solve this problem, material in the form of plated steel sheet may be pressed. However, if a plated steel sheet is subjected to a press-working process involving cutting, such as stamping, the plating layer is severed at the cut edge surface, exposing base steel. If base steel at the cut edge surface remains exposed, corrosion initiates at the cut edge surface. Addressing this requires an additional step for plating the cut edge surface at which base steel is exposed, increasing work time and costs.

JP 2017-87294 A discloses a cutting method for cutting a surface-treated steel sheet using a die assembly in which the clearance between the die and punch is 1 to 20 % of the sheet thickness and the shoulder of at least one of the die or punch has a radius curvature 0.12 times the sheet thickness of the surface-treated steel sheet or larger.

JP 2009-287082 A discloses a cutting method for cutting a zinc-based plated steel sheet using a die assembly composed of a die, a punch and a die holder, where that one of the die and punch which corresponds to the product steel sheet has a rounded shoulder with a radius of curvature 0.10 to 0.50 times the sheet thickness of the steel sheet, whereas the shoulder of the other one and the shoulder of the die holder each form a right angle, and where the cutting is performed with the side surfaces of the die and die holder aligned and with a clearance between the die and punch is not larger than 1.0 % of the sheet thickness of the steel sheet.

### PRIOR ART DOCUMENTS

### PATENT DOCUMENTS

Patent Document 1: JP 2017-87294 A
Patent Document 2: JP 2009-287082 A
Patent Document 3: JP 2020-32437 A
Patent Document 4: JP 2006-263755 A

### SUMMARY OF THE INVENTION

### PROBLEMS TO BE SOLVED BY THE INVENTION

The processing conditions of JP 2017-87294 A reduce the fracture surface produced and increase the length of the shear surface when the die is conditioned to have a small clearance; however, the plating layer on the resulting shear surface is limited to a narrow area. On the other hand, when the die is conditioned to have a large clearance, the length of the shear surface is larger than with conventional conditions but a certain amount of fracture surface is produced. Thus, corrosion may occur in non-plated portions of the shear surface and the fracture surface.

The processing conditions of JP 2009-287082 A reduce the fracture surface produced and increase the length of the shear surface; however, the plating layer on the resulting shear surface is limited to a narrow area.

An object of the present invention is to provide a processing apparatus capable of manufacturing a metallic member with improved corrosion resistance at its cut edge surface, a method of manufacturing a metallic member with improved corrosion resistance at its cut edge surface, and a metallic member with improved corrosion resistance at its cut edge surface.

### MEANS FOR SOLVING THE PROBLEMS

A processing apparatus according to an embodiment of the present invention is a processing apparatus including a punch and a die to be positioned on one side and another side of a workpiece constituted by a metal sheet, the one and the other sides being arranged in a sheet-thickness direction, the processing apparatus adapted to shear the metal sheet by moving at least one of the punch and the die in the sheet-thickness direction such that the punch and the die are located closer to each other, wherein: each of the punch and the die includes an end face and a side face; the punch and the die are positioned such that the end face of the punch and the end face of the die do not overlap in plan view; at least one of the side face of the punch and the side face of the die includes an inclined portion providing a surface inclined to face the metal sheet and shaped to overlap the other one of the punch and the die in plan view; and the surface provided by the inclined portion and the sheet-thickness direction form an angle not smaller than 15°.

A method of manufacturing a metallic member according to an embodiment of the present invention includes using the above-described processing apparatus to shear a metal sheet having a plating layer on a surface.

A metallic member according to an embodiment of the present invention is a metallic member formed from a metal sheet having a plating layer on a surface, wherein an edge surface includes one inclined surface having a dimension in a sheet-thickness direction not smaller than 60 % of a sheet thickness, the inclined surface and the sheet-thickness direction forming an angle not smaller than 15°, at least a portion of the inclined surface being covered with the plating layer.

### EFFECTS OF THE INVENTION

The present invention provides a metallic member with improved corrosion resistance at its cut edge surface.

### BRIEF DESCRIPTION OF THE DRAWINGS

[FIG. 1] FIG. 1 is a cross-sectional view of a processing apparatus according to a first embodiment of the present invention, schematically showing its construction.
[FIG. 2] FIG. 2 is a cross-sectional view of the processing apparatus of FIG. 1, schematically illustrating the shearing of a metal sheet by the apparatus.
[FIG. 3] FIG. 3 is a perspective view of a metallic member according to one implementation of the present invention.
[FIG. 4] FIG. 4 is a cross-sectional view taken on line IV-IV of FIG. 3.
[FIG. 5] FIG. 5 is a cross-sectional view of a processing apparatus according to a second embodiment of the present invention, schematically showing its construction.
[FIG. 6] FIG. 6 is a cross-sectional view of the processing apparatus of FIG. 5, schematically illustrating the shearing of a metal sheet by the apparatus.
[FIG. 7] FIG. 7 is a perspective view of a metallic member according to one implementation of the present invention.
[FIG. 8] FIG. 8 is a cross-sectional view taken on line VIII-VIII of FIG. 7.
[FIG. 9] FIG. 9 is a cross-sectional view of a processing apparatus according to a third embodiment of the present invention, schematically showing its construction.
[FIG. 10] FIG. 10 is a cross-sectional view of the processing apparatus of FIG. 9, schematically illustrating the shearing of a metal sheet by the apparatus.
[FIG. 11] FIG. 11 is a cross-sectional view of a processing apparatus according to a fourth embodiment of the present invention, schematically showing its construction.
[FIG. 12] FIG. 12 is a perspective view of a metallic member according to one implementation of the present invention.
[FIG. 13] FIG. 13 shows contour diagrams each illustrating the stress distribution inside a metal sheet in the middle of the processing, calculated by the finite element method.
[FIG. 14] FIG. 14 shows photographs each showing a cross section of a metal sheet immediately before fracture.
[FIG. 15] FIG. 15 is a graph showing the relationship between the angle θ and height H and the push-in limit during stamping.
[FIG. 16] FIG. 16 shows photographs each showing a cross section of a metal sheet after processing, as well as results of element analysis of the edge surface.
[FIG. 17] FIG. 17 is a graph showing the relationship between the angle θ and height H and the persistence of plating.
[FIG. 18] FIG. 18 shows photographs of metal sheets before and after atmospheric corrosion testing.
[FIG. 19] FIG. 19 shows photographs each showing a cross section of a metal sheet after processing, as well as results of element analysis of the edge surface.
[FIG. 20] FIG. 20 is a graph showing the relationship between the angle θ and height H and the persistence of plating.
[FIG. 21] FIG. 21 shows photographs of metal sheets before and after atmospheric corrosion testing.

### EMBODIMENTS FOR CARRYING OUT THE INVENTION

Now, embodiments of the present invention will be described in detail with reference to the drawings. The same or corresponding components in the drawings are labeled with the same reference numerals, and their description will not be repeated. The size ratios between the components shown in the drawings do not necessary represent the actual size ratios.

### [First Embodiment]

### [Processing Apparatus]

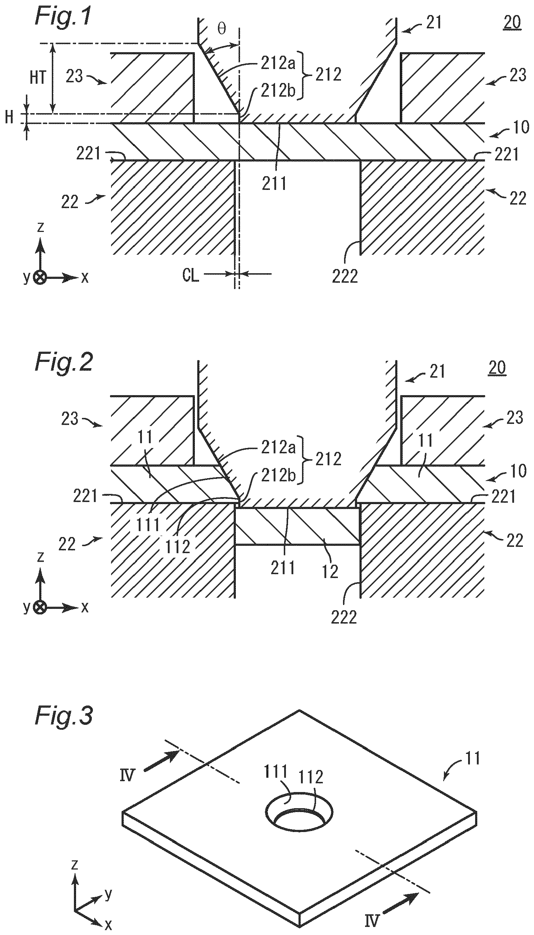

FIG. 1 is a cross-sectional view of a processing apparatus 20 according to a first embodiment of the present invention, schematically showing its construction. The processing apparatus 20 is a die assembly used to shear a metal sheet. Although not limiting, the processing apparatus 20 may be particularly suitably used to shear a metal sheet having a plating layer on its surface (hereinafter sometimes referred to as "surface-plated metal sheet"). Although not limiting, the shearing includes hole making, stamping and cutting.

The processing apparatus 20 includes a punch 21, a die 22, and a sheet holder 23. The punch 21 and die 22 are positioned on one side and the other side of a workpiece constituted by a metal sheet 10, the one and the other sides being arranged in the sheet-thickness direction. The processing apparatus 20 uses a press, not shown, to shear the metal sheet 10 by moving at least one of the punch 21 and die 22 in the sheet-thickness direction such that the punch 21 and die 22 are located closer to each other. The sheet holder 23 is positioned to face the die 22, with the metal sheet 10 sandwiched in between, and prevents the metal sheet 10 from warping during shearing of the metal sheet 10 and from clinging to the punch 21 during removal of the punch 21.

The direction represented by the sheet-thickness direction will hereinafter sometimes be referred to as z-direction, while a plane perpendicular to the z-direction will sometimes be referred to as xy-plane. The dimension in the sheet-thickness direction will sometimes be referred to as "height".

The punch 21 includes an end face 211 and a side face 212 contiguous with the end face. Similarly, the die 22 includes an end face 221 and a side face 222 contiguous with the end face. The end face 211 contacts the metal sheet 10 earlier during processing than the side face 212 does, and the end face 221 contacts the metal sheet 10 earlier during processing than the side face 222 does.

The end face 211 and the end face 221 are preferably perpendicular to the sheet-thickness direction. In other words, the end faces 211 and 221 are preferably parallel to the metal sheet 10.

A clearance CL of a predetermined size in plan view is provided between the contour of the end face 211 and the contour of the end face 221. Thus, the punch 21 and die 22 are positioned such that the end face 211 and the end face 221 do not overlap in plan view. As used herein, "in plan view" means looking at an object exactly in one sheet-thickness direction. The end face 211 and the end face 221 "not overlapping in plan view" means that the end faces 211 and 221 do not overlap when the end faces 211 and 221 are projected onto a plane perpendicular to the sheet-thickness direction (i.e., an xy-plane).

In this arrangement, the punch 21 and die 22 may be moved closer to each other until the distance between the end faces 211 and 221 in the sheet-thickness direction is zero or less. This enables severing the metal sheet 10 in a more reliable manner. It also prevents the punch 21 and die 22 from hitting each other when the metal sheet 10 is severed.

Each of the end faces 211 and 221 may have any shape as long as they do not overlap in plan view. The planar shape of the end face 211 (i.e., shape in an xy-plane) may be, for example, circular, elliptical, or rectangular. The planar shape of the end face 221 may be, for example, a shape with a circular hole formed therein, a shape with an elliptical hole formed therein, or a shape with a rectangular hole formed therein. The planar shape of the end face 221 is preferably such that the clearance CL is constant.

The planar shape of the end face 211 is preferably circular. The planar shape of the end face 221 is preferably a shape with a circular hole formed therein. If a circular shape is used, the end faces constrains the material circumferentially, which can achieve uniform deformation. Thus, when a surface-plated metal sheet is sheared, good corrosion resistance is provided to the edge surface.

The end face 211 is not limited to any particular size (i.e., surface area). However, if the end face 211 is too small, it may be unable to withstand the load during processing, and thus be damaged. The size of the end face 211 is preferably equivalent to a circle with a diameter of 10 mm (i.e., area of about 78 mm²) is larger. On the other hand, if the end face 211 is too large, this increases the load required to push the metal sheet 10 with an inclined portion 212a, described further below, which may require use of a press with higher performance.

The punch 21 and die 22 may be solid or may be hollow. The punch 21 and die 22 are preferably solid. The punch 21 and die 22 receive compressive stress during a push of the metal sheet 10 by the inclined portion 212a, discussed further below. Accordingly, the punch 21 and die 22 preferably have sufficient strengths for withstanding such stress.

The side face 212 of the punch 21 includes an inclined portion 212a providing a surface inclined to face the metal sheet 10 and shaped to overlap the die 22 in plan view.

As used herein, "providing a surface inclined to face the metal sheet 10" means that a normal to the surface provided by the inclined portion 212a that extends outwardly from the surface is directed toward the metal sheet 10. More specifically, it means that, where the positive z-direction is defined as the direction from the metal sheet 10 toward the position of the punch 21 and the negative z-direction is defined as the direction toward the position of the die 22, the component in the z-direction of the normal to the surface provided by the inclined portion 212a extending outwardly from the surface is negative.

As used herein, the inclined portion 212a and die 22 "overlapping in plan view" means that the inclined portion 212a and die 22 overlap when the inclined portion 212a and die 22 are projected onto a plane perpendicular to the sheet-thickness direction (i.e., an xy-plane). For the purposes of this definition, it is not necessary that the entire inclined portion 212a overlap the die 22; it is sufficient if at least a portion of the inclined portion 212a overlaps the die 22.

In this arrangement, when the punch 21 and die 22 are moved closer to each other, the metal sheet 10 is sandwiched by the inclined portion 212a and die 22 such that compressive stress is applied to the metal sheet 10. This compressive stress deforms the metal sheet 10 into a specific shape. Such shapes will be discussed further below.

The angle formed by the surface provided by the inclined portion 212a and the sheet-thickness direction, θ, is not smaller than 15°. Preferable ranges of the angle θ will be specified further below.

Relative to the sheet thickness of the metal sheet 10, the height of the inclined portion 212a, HT, is preferably not smaller than 60 % of the sheet thickness of the metal sheet 10. The height HT of the inclined portion 212a is preferably not smaller than 1 mm, more preferably not smaller than 3 mm, and yet more preferably not smaller than 5 mm.

In addition to the inclined portion 212a, the side face 212 of the punch 21 includes an extreme end portion 212b contiguous with the inclined portion 212a and located at an end adjacent to the metal sheet 10 as determined along the sheet-thickness direction and providing a surface generally parallel to the sheet-thickness direction. The angle formed by the surface provided by the extreme end portion 212b and the sheet-thickness direction is preferably not larger than 5.0°, more preferably not larger than 3.0°, yet more preferably not larger than 1.0°, and still more preferably not larger than 0.5°.

The extreme end portion 212b enables applying large shearing stress to the metal sheet 10. This further ensures that the metal sheet 10 is severed. However, depending on the size of the clearance CL and the material of the metal sheet 10, the metal sheet 10 may be severed with no extreme end portion 212. Accordingly, it is not essential that the side face 212 include an extreme end portion 212b; the side face 212 need not include an extreme end portion 212b.

Furthermore, the presence of the extreme end portion 212b makes the size of the clearance CL clearer, which further ensures that the punch 21 and die 22 are properly positioned. This effect is produced if an extreme end portion 212b is present, even if the height H of the extreme end portion 212b is small. Relative to the sheet thickness of the metal sheet 10, a lower limit of the height H is preferably 1 % of the sheet thickness of the metal sheet 10, more preferably 2 %, and yet more preferably 3 %. A lower limit of the height H is preferably 0.03 mm, more preferably 0.06 mm, and yet more preferably 0.09 mm.

On the other hand, if the height H of the extreme end portion 212b is too large, the metal sheet 10 may be severed before the inclined portion 212a contacts the metal sheet 10. Further, there is a tendency that the smaller the height H, the later the time at which the metal sheet 10 is severed. If a surface-plated metal sheet is sheared, the later the time at which the metal sheet 10 is severed, the better corrosion resistance is provided to the edge surface, as discussed in more detail further below.

Thus, to provide good corrosion resistance to a produced metallic member, the smaller the height H of the extreme end portion 212b, the better. Relative to the sheet thickness of the metal sheet 10, an upper limit of the height H is preferably 50 % of the sheet thickness of the metal sheet 10, more preferably 40 %, and yet more preferably 30 %. An upper limit of the height H is preferably 1.6 mm, more preferably 1.2 mm, and yet more preferably 0.8 mm.

The side face 222 of the die 22 is generally parallel to the sheet-thickness direction. The side face 222 of the die 22 does not include an inclined portion like the inclined portion 212a of the side face 212 of the punch 21.

### [Method of Manufacturing Metallic Member]

Next, a method of manufacturing a metallic member will be described. A method of manufacturing a metallic member according to the present embodiment includes the step of shearing a surface-plated metal sheet using the processing apparatus 20.

Although not limiting, the base material of the surface-plated metal sheet may be steel, copper, a copper alloy, aluminum, or an aluminum alloy, for example. The manufacturing method according to the present embodiment is particularly suitable in implementations where the base material of the surface-plated metal sheet is steel, i.e., the surface-plated metal sheet is a plated steel sheet, because steel is prone to rust and, as such, providing corrosion resistance to steel according to the present embodiment has significant advantages. The plated steel sheet may be, for example, a Zn-based plated steel sheet or an Al-based plated steel sheet.

More preferably, the surface-plated metal sheet is a Zn-based plated steel sheet. A Zn-based plating acts as a sacrificial corrosion protection for the steel sheet, i.e., base material. This prevents corrosion initiating at exposed base material at the cut edge surface resulting from the shearing, thereby further increasing the corrosion resistance of the produced metallic member. Although not limiting, the Zn-based plating may be hot-dip galvanizing, galvannealing, Zn-Ni-based plating, Zn-Al-based plating, Zn-Mg-based plating, or Zn-Al-Mg-based plating, for example.

The sheet thickness of the surface-plated metal sheet is preferably 0.2 to 9 mm. If the sheet thickness is too large, the proportion of the fracture surface after shearing may be larger, reducing the effect of improving corrosion resistance. An upper limit of the sheet thickness of the surface-plated steel sheet is more preferably 6 mm. On the other hand, if the sheet thickness is sufficiently small, any rust developed on the edge surface will not be noticeable and, as such, the benefit of improved corrosion resistance will be small. A lower limit of the sheet thickness of the surface-plated steel sheet is more preferably 1.0 mm.

The thickness of the plating layer of the surface-plated metal sheet is preferably not smaller than 15 pm. If the plating layer is too small, the plating layer may be insufficient for covering the edge surface such that corrosion resistance may not be provided to the edge surface. A lower limit of the thickness of the plating layer of the surface-plated metal sheet is more preferably 30 pm. Although not limiting, an upper limit of the thickness of the plating layer of the surface-plated metal sheet is 150 pm, for example.

The step of shearing the metal sheet 10 (i.e., surface-plated metal sheet) using the processing apparatus 20 will be described referring to FIGS. 1 and 2. As mentioned in the description of the construction of the processing apparatus 20, the punch 21 and die 22 are positioned on one side and the other side, arranged in the sheet-thickness direction, of the metal sheet 10. At least one of the punch 21 and die 22 is moved in the sheet-thickness direction by a press, not shown, such that the punch 21 and die 22 are located closer to each other. During this, an inclined surface 111 is formed in the metal sheet 10 by the inclined portion 212a of the punch 21, as shown in FIG. 2.

Thereafter, the punch 21 and die 22 are moved even closer to each other such that the metal sheet 10 is severed into a first portion 11 and a second portion 12. At this time, a cut surface 112 is formed in the edge surface of the first portion 11, contiguous with the inclined surface 111. The cut surface 112 includes a shear surface and a fracture surface. However, depending on the processing conditions, the cut surface 112 may be constituted by only one of a shear surface and a fracture surface, or no cut surface 112 may be formed at all.

According to the present embodiment, the first portion 11 including the inclined surface 111 provides a product (i.e., metallic member). The inclined surface 111 is formed through deformation of the surface of the metal sheet 10, which is a surface-plated metal sheet, and thus has a plating layer at least in some portions. The inclined surface 111 may have some of its plating layer peeled off by sliding against the punch 21, for example, but still is more likely to be covered with a plating layer than the shear surface and fracture surface. Further, the thickness of the plating layer covering the inclined surface 111 does not significantly decrease from the amount of thickness of the plating layer of the surface-plated metal sheet.

The shear surface may be covered with a plating layer originating from the plating layer on the surface of the metal sheet 10 that has detoured and entered, or may not be covered with a plating layer. The fracture surface is usually not covered with a plating layer.

With the processing apparatus 20 according to the present embodiment and the method of manufacturing a metallic member according to the present embodiment, the edge surface of a produced metallic member includes an inclined surface, thereby increasing the proportion of the edge surface covered with a plating layer. This provides a metallic member with improved corrosion resistance at its cut edge surface.

The angle θ (FIG. 1) formed by the surface provided by the inclined portion 212a of the punch 21 and the sheet-thickness direction is not smaller than 15°. There is a tendency that the larger the angle θ, the later the time at which the metal sheet 10 is severed. "Later the time at which the metal sheet 10 is severed" means that the metal sheet 10 is not severed until the punch 21 and die 22 are moved even closer to each other. The later the time at which the metal sheet 10 is severed, the smaller the height of the cut surface 112 and the higher the proportion of the height of the inclined surface 111 in the sheet thickness of the metal sheet 10. Thus, the larger the angle θ, the higher the proportion of the edge surface covered with a plating layer. A lower limit of the angle θ is preferably 20°, and more preferably 30°.

On the other hand, the larger the angle θ, the larger the load required to form the inclined surface 111. The angle θ is equal to the angle of inclination of the inclined surface 111; as such, a larger angle θ means a larger projection area of the formed inclined surface 111 in an xy-plane. An upper limit of the angle θ is preferably 60°, more preferably 50°, and yet more preferably 45°.

As mentioned in the description of the construction of the processing apparatus 20, there is a tendency that the smaller the height H of the extreme end portion 212b of the punch 21, the later the time at which the metal sheet 10 is severed. The later the time at which the metal sheet 10 is severed, the smaller the height of the cut surface 112 and the higher the proportion of the height of the inclined surface 111 in the sheet thickness of the metal sheet 10. Thus, the smaller the height H, the higher the proportion of the edge surface covered with a plating layer.

### [Metallic Member]

As mentioned above, with the method of manufacturing a metallic member according to the present embodiment, the first portion 11 in FIG. 2 provides a product (i.e., metallic member). After the second portion 12 is stamped out of the metal sheet 10, the remaining portion constitutes the first portion 11. The first portion 11 will be hereinafter referred to as metallic member 11.

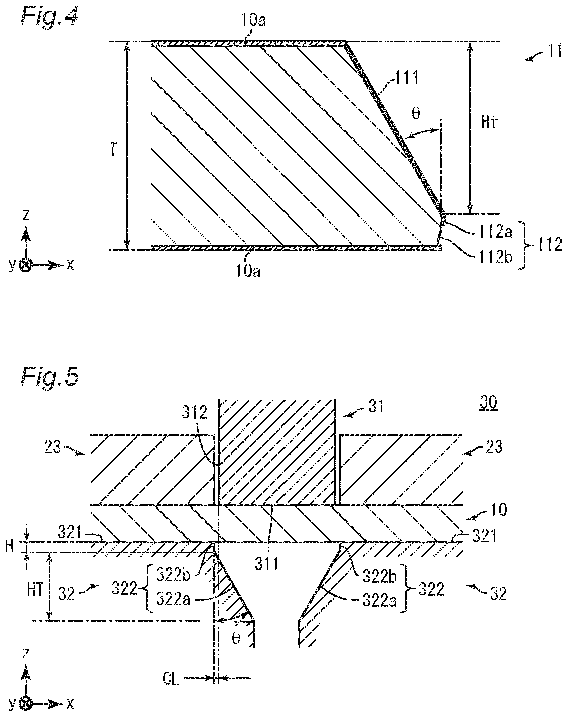

FIG. 3 is a perspective view of the metallic member 11, and FIG. 4 is a cross-sectional view taken on line IV-IV in FIG. 3. Although FIG. 3 shows an implementation where the hole in the metallic member 11 has a circular contour, this is merely illustrative. As mentioned in the description of the construction of the processing apparatus 20, each of the end face 211 of the punch 21 and the end face 221 of the die 22 may have any planar shape. Accordingly, the contour of the hole in the metallic member 11 may have any shape.

The metallic member 11 includes one inclined surface 111 in its edge surface. The metallic member 11 further includes a cut surface 112 contiguous with the inclined surface 111 and located at that one of the ends of the metallic member 11 as determined along the sheet-thickness direction at which the size of the member is increased by the inclined surface 111. As show in FIG. 4, the cut surface 112 includes a shear surface 112a providing a surface generally parallel to the sheet-thickness direction, and a fracture surface 112b. The shear surface 112a and the fracture surface 112b are formed in this order, beginning at the one adjacent to the inclined surface 111.

The surfaces of the metallic member 11 except for the edge surface are covered with the plating layer 10a. In the edge surface of the metallic member 11, at least a portion of the inclined surface 111 is covered with the plating layer 10a. The shear surface 112a may be covered, or may not be covered, with the plating layer 10a. The fracture surface 112b is usually not covered with the plating layer 10a. FIG. 4, by way of example, shows an implementation where the entire inclined surface 111 and a portion of the shear surface 112a are covered with the plating layer 10a and base material is exposed at the remainder of the shear surface 112a and the fracture surface 112b.

The height Ht of the inclined surface 111 is not smaller than 60 % of the sheet thickness T. The higher the proportion of the height Ht in the sheet thickness T, the higher the corrosion resistance of the edge surface. A lower limit of the height Ht is preferably 70 % of the sheet thickness T, more preferably 80 %, and yet more preferably 90 %. The height Ht of the inclined surface 111 may be increased by, for example, increasing the angle θ formed by the surface provided by the inclined portion 212a of the punch 21 (FIG. 1) and the sheet-thickness direction, or reducing the height H of the extreme end portion 212b of the punch 21.

The entire edge surface of the metallic member 11 may be constituted by the inclined surface 111. In other words, the metallic member 11 need not include a cut surface 112. On the other hand, if the metallic member 11 includes a cut surface 112, the metallic member 11 can be manufactured in a more stable manner. A lower limit of the height of the cut surface 112 is preferably 3 % of the sheet thickness T, and more preferably 5 %.

Even if a portion of the cut surface 112 is not covered with the plating layer 10a, the metallic member 11 has good corrosion resistance because at least a portion of the inclined surface 111 is covered with the plating layer 10a. Particularly, if the surface-plated metal sheet is a Zn-based plated steel sheet, the Zn-based plating layer acts as a sacrificial corrosion protection for the base material, i.e., steel sheet, which provides a certain corrosion resistance even if the proportion of the surface at which base material is exposed is relatively large.

The angle θ formed by the inclined surface 111 and the sheet-thickness direction is not smaller than 15°. A lower limit of the angle θ is preferably 20°, and more preferably 30°. An upper limit of the angle θ is preferably 60°, more preferably 50°, and yet more preferably 45°.

The angle θ formed by the inclined surface 111 and the sheet-thickness direction may be controlled by adjusting the shape of the punch 21 (FIG. 1). The angle θ formed by the inclined surface 111 and the sheet-thickness direction is equal to the angle θ formed by the inclined portion 212a and the sheet-thickness direction.

The plating layer 10a covering at least a portion of the inclined surface 111 is derived from the workpiece. Consequently, the plating layer 10a covering at least a portion of the inclined surface 111 has completely the same composition as the plating layer 10a covering the surfaces other than the edge surface.

The proportion of the surface region of the inclined surface 111 covered with the plating layer 10a is preferably not lower than 60 %. More preferably, the entire inclined surface 111 is covered with the plating layer 10a.

The thickness of the portion of the plating layer 10a covering the inclined surface 111a is preferably 25 to 90 % of the thickness of the portions of the plating layer 10a covering the surfaces other than the edge surface.

Although FIG. 4 shows an implementation where the inclined surface 111 and the cut surface 112 are formed in the edge surface of the metallic member and the cut surface 112 includes a shear surface 112a and a fracture surface 112b, the cut surface 112 may not include one of a shear surface 112a and a fracture surface 112b. Further, as mentioned above, the metallic member 11 may not have a cut surface 112.

The processing apparatus 20, the method of manufacturing a metallic member, and the metallic member 11 according to the first embodiment of the present invention have been described. The present embodiment provides a metallic member with improved corrosion resistance at the cut edge surface.

### [Second Embodiment]

### [Processing Apparatus]

FIG. 5 is a cross-sectional view of a processing apparatus 30 according to a second embodiment of the present invention, schematically showing its construction. The processing apparatus 30 is different from the processing apparatus 20 according to the first embodiment (FIG. 1) in the construction of the punch and die. The processing apparatus 30 includes a punch 31 replacing the punch 21 of the processing apparatus 20, and a die 32 replacing the die 22 of the processing apparatus 20.

The punch 31 includes an end face 311 and a side face 312 contiguous with the end face. Similarly, the die 32 includes an end face 321 and a side face 322 contiguous with the end face. According to the present embodiment, too, a clearance CL with a predetermined size in plan view is provided between the contour of the end face 311 and the contour of the end face 321. Thus, the punch 31 and die 32 are positioned such that the end face 311 and the end face 321 do not overlap in plan view.

The side face 312 of the punch 31 is generally parallel to the sheet-thickness direction.

The side face 322 of the die 32 includes an inclined portion 322a providing a surface inclined to face the metal sheet 10 and shaped to overlap the punch 31 in plan view.

As used herein, "providing a surface inclined to face the metal sheet 10" means that, more specifically, where the positive z-direction is defined as the direction from the metal sheet 10 toward the position of the punch 31 and the negative z-direction is defined as the direction toward the position of the die 32, the component in the z-direction of the normal to the surface provided by the inclined portion 322a extending outwardly from the surface is positive.

As used herein, the inclined portion 322a and punch 31 "overlapping in plan view" means that the inclined portion 322a and punch 31 overlap when the inclined portion 322a and punch 31 are projected onto a plane perpendicular to the sheet-thickness direction (i.e., an xy-plane). For the purposes of this definition, it is not necessary that the entire inclined portion 322a overlap the punch 31; it is sufficient if at least a portion of the inclined portion 322a overlaps the punch 31.

In this arrangement, when the punch 31 and die 32 are moved closer to each other, the metal sheet 10 is sandwiched by the inclined portion 322a and punch 31 such that compressive stress is applied to the metal sheet 10. This compressive stress deforms the metal sheet 10 into a specific shape.

The angle θ formed by the surface provided by the inclined portion 322a and the sheet-thickness direction and the height HT of the inclined portion 322a are the same as in the first embodiment.

In addition to the inclined portion 322a, the side face 322 of the die 32 includes an extreme end portion 322b contiguous with the inclined portion 322a and located at an end adjacent to the metal sheet 10 as determined along the sheet-thickness direction and providing a surface generally parallel to the sheet-thickness direction. The height H of the extreme end portion 322b is the same as in the first embodiment. Further, as is the case with the first embodiment, the side face 322 may not include an extreme end portion 322b.

### [Method of Manufacturing Metallic Member]

Next, a method of manufacturing a metallic member will be described. A method of manufacturing a metallic member according to the present embodiment includes the step of shearing a surface-plated metal sheet using the processing apparatus 30.

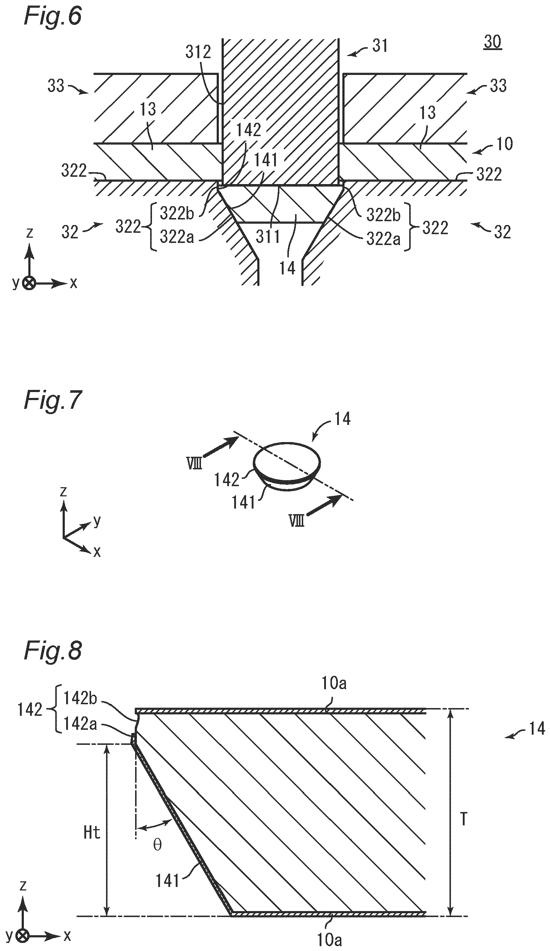

The step of shearing the metal sheet 10 (i.e., surface-plated metal sheet) using the processing apparatus 30 will be described referring to FIGS. 5 and 6. The punch 31 and die 32 are positioned on one side and the other side, arranged in the sheet-thickness direction, of the metal sheet 10. At least one of the punch 31 and die 32 is moved in the sheet-thickness direction by a press, not shown, such that the punch 31 and die 32 are located closer to each other. During this, an inclined surface 141 is formed in the metal sheet 10 by the inclined portion 322a of the die 32, as shown in FIG. 6.

Thereafter, the punch 31 and die 32 are moved even closer to each other such that the metal sheet 10 is severed into a first portion 13 and a second portion 14. At this time, a cut surface 142 is formed in the edge surface of the second portion 14, contiguous with the inclined surface 141. The cut surface 142 includes a shear surface and a fracture surface. However, depending on the processing conditions, the cut surface 142 may be constituted by only one of a shear surface and a fracture surface, or no cut surface 142 may be formed at all.

According to the present embodiment, the second portion 14 provides a product (i.e., metallic member).

With the processing apparatus 30 according to the present embodiment and the method of manufacturing a metallic member according to the present embodiment, the edge surface of a produced metallic member includes an inclined surface 141, thereby increasing the proportion of the edge surface covered with a plating layer. This provides a metallic member with improved corrosion resistance at its cut edge surface.

### [Metallic Member]

As mentioned above, with the method of manufacturing a metallic member according to the present embodiment, the second portion 14 in FIG. 6 provides a product (i.e., metallic member). The second portion 14 is stamped out of the metal sheet 10. The second portion 14 will be hereinafter referred to as metallic member 14.

FIG. 7 is a perspective view of the metallic member 14, and FIG. 8 is a cross-sectional view taken on line VIII-VIII in FIG. 7. Although FIG. 7 shows an implementation where the metallic member 14 has a circular contour, this is merely illustrative. The contour of the metallic member 14 may have any shape.

The metallic member 14 includes one inclined surface 141 in its edge surface. The metallic member 14 further includes a cut surface 142 contiguous with the inclined surface 141 and located at that one of the ends of the metallic member 14 as determined along the sheet-thickness direction at which the size of the member is increased by the inclined surface 141. As shown in FIG. 8, the cut surface 142 includes a shear surface 142a providing a surface generally parallel to the sheet-thickness direction, and a fracture surface 142b. The shear surface 142a and the fracture surface 142b are formed in this order, beginning at the one adjacent to the inclined surface 141.

In the metallic member 14, as is the case with the metallic member 11 (FIG. 4), the surfaces except for the edge surface are covered with the plating layer 10a. In the edge surface of the metallic member 14, at least a portion of the inclined surface 141 is covered with the plating layer 10a. The shear surface 142a may be covered, or may not be covered, with the plating layer 10a. The fracture surface 142b is usually not covered with the plating layer 10a. FIG. 8, by way of example, shows an implementation where the entire inclined surface 111 and a portion of the shear surface 142a are covered with the plating layer 10a and base material is exposed at the remainder of the shear surface 142a and the fracture surface 142b.

The height Ht of the inclined surface 141, the height of the cut surface 142, the angle θ formed by the inclined surface 141, the sheet-thickness direction, etc., are the same as in the first embodiment. The height Ht of the inclined surface 141, the height of the cut surface 142, and the angle θ formed by the inclined surface 141 and the sheet-thickness direction may be controlled by adjusting the shape of the die 32 (FIG. 5). Further, as is the case with the first embodiment, the cut surface 142 may not include one of a shear surface 142a and a fracture surface 142b, and the metallic member 14 may not have a cut surface 142.

The processing apparatus 30, the method for manufacturing a metallic member, and the metallic member 14 according to the second embodiment of the present invention have been described. While the processing apparatus 20 according to the first embodiment (FIG. 1) provides an inclined portion 212a in the side face 212 of the punch 21, the processing apparatus 30 according to the second embodiment (FIG. 5) provides an inclined portion 322a in the side face 322 of the die 32. While the first embodiment provides an inclined surface 111 in the first portion 11 (FIG. 2), the second embodiment provides an inclined surface 141 in the second portion 14 (FIG. 6). Both embodiments produce the same effects in terms of the corrosion resistance of the edge surface.

In other words, to produce a metallic member having an edge surface with improved corrosion resistance, it is sufficient if at least one of the side face of the punch and the side face of the die includes an inclined portion. The inclined portion is only required to provide a surface inclined to face the metal sheet and overlapping the other one of the punch and die in plan view.

### [Third Embodiment]

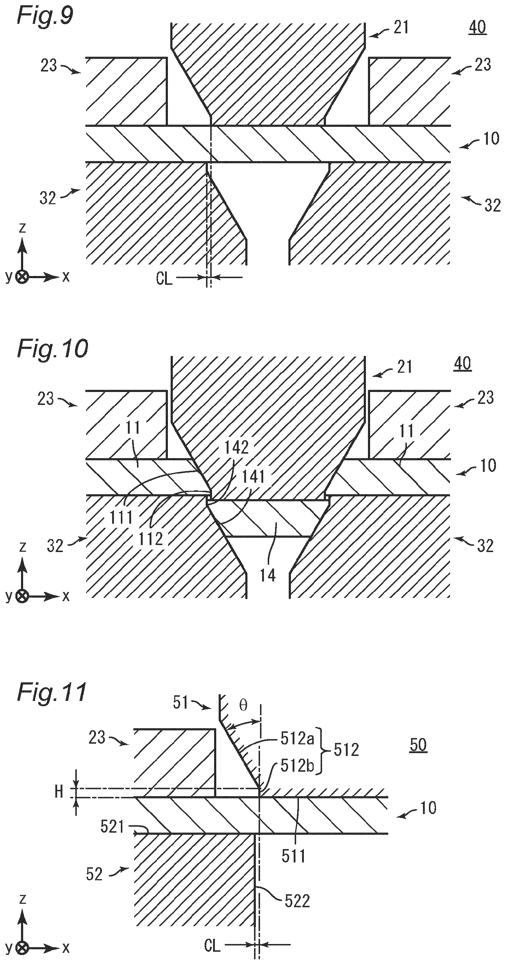

FIG. 9 is a cross-sectional view of a processing apparatus 40 according to a third embodiment of the present invention, schematically showing its construction. The processing apparatus 40 is different from the processing apparatus 20 according to the first embodiment (FIG. 1) in the construction of the die. The processing apparatus 40 includes a die 32 replacing the die 22 of the processing apparatus 20. The die 32 is the same as in the processing apparatus 30 according to the second embodiment (FIG. 5).

According to the present embodiment, too, a clearance CL of a predetermined size in plan view is provided between the contour of the end face of the punch 21 and the contour of the end face of the die 32. Thus, the punch 21 and die 32 are positioned such that their end faces do not overlap each other in plan view.

According to the present embodiment, an inclined portion is provided in each of the side face of the punch 21 and the side face of the die 32. As shown in FIG. 10, the metal sheet 10 is severed into a first portion 11 including an inclined surface 111 and a second portion 14 including an inclined surface 141. According to the present embodiment, each of the first and second portions 11 and 14 provides a product (i.e., metallic member).

The processing apparatus, the method for manufacturing a metallic member, and the metallic member according to the third embodiment of the present invention have been described. The present embodiment, too, provides a metallic member with improved corrosion resistance at its cut edge surface.

### [Fourth Embodiment]

### [Processing Apparatus]

FIG. 11 is a cross-sectional view of a processing apparatus 50 according to a fourth embodiment of the present invention, schematically showing its construction. The processing apparatus 50 is different from the processing apparatus 20 according to the first embodiment (FIG. 1) in the construction of the punch and die. The processing apparatus 50 includes a punch 51 replacing the punch 21 of the processing apparatus 20, and includes a die 52 replacing the die 22 of the processing apparatus 20.

The punch 51 includes an end face 511 and a side face 512 contiguous with the end face. Similarly, the die 52 includes an end face 521 and a side face 522 contiguous with the end face. A clearance CL of a predetermined size in plan view is provided between the contour of the end face 511 and the contour of the end face 521. Thus, the punch 51 and die 52 are positioned such that their end faces do not overlap in plan view.

As is the case with the first embodiment, the side face 512 of the punch 51 includes an inclined portion 521a and an extreme end portion 512b. The side face 522 of the die 52 is generally parallel to the sheet-thickness direction.

The punch 51 and die 52 of the processing apparatus 52 are different from the punch 51 and die 22 of the processing apparatus 20 (FIG. 1) in their planar shape.

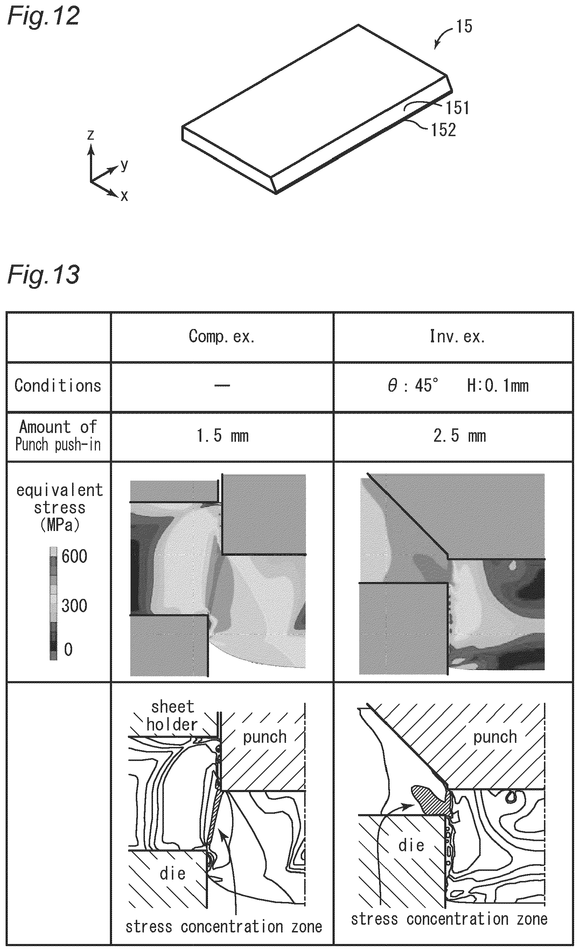

FIG. 12 is a perspective view of a metallic member 15 produced by the processing apparatus 50. The metallic member 15 is produced by cutting a metal sheet along one direction perpendicular to the sheet-thickness direction (i.e., y-direction). The metallic member 15 includes an inclined surface 151 and a cut surface 152.

The inclined surface 151 and cut surface 152 are the same as the inclined surface 111 and cut surface 112 of the metallic member 11 (FIG. 3) except that they are different in their planar shape (i.e., shape in an xy-plane). Thus, the present embodiment, too, provides a metallic member with improved corrosion resistance at its cut edge surface.

FIGS. 3 and 7 illustrate implementations where the metallic member produced is the remainder of the metal sheet after a predetermined shape has been stamped out (FIG. 3), and where the metallic member is the portion stamped out of the metal sheet (FIG. 7). In addition, the same effects produced by the previously discussed embodiments are produced by implementations where a metal sheet is cut into a metallic member, as according to the present embodiment. It will be understood that the line along which the metal sheet 10 is cut need not be a straight line.

The above embodiment illustrates an implementation where an inclined portion 512a is provided in the side face 512 of the punch 51; in other implementations, in lieu of the side face 512 of the punch 51 or in addition to the side face 512 of the punch 51, the side face 522 of the die 52 may include an inclined portion.

### EXAMPLES

Now, the present invention will be described more specifically with reference to examples. The present invention is not limited to these examples.

A processing apparatus representing the construction of the processing apparatus 20 (FIG. 1) was used to perform stamping on a metal sheet. The end face 211 of the punch 21 had a circular shape with a diameter of 10.0 mm, and the clearance CL was 0.05 mm (the diameter of the hole in the die 22 being 10.1 mm). Trial production was performed while the angle θ was changed to 15°, 30° and 45° and the height H was changed to 0.1 mm, 0.4 mm and 0.8 mm. The workpiece was a Zn-Al-Mg-based plated steel sheet with a yield strength of 366 MPa, a tensile strength of 454 MPa, an elongation of 31 %, a sheet thickness of 3.2 mm, and an amount of adherent plating of 275 g/m².

For comparative examples, stamping was performed on a metal sheet using a columnar punch with a diameter of 10.0 mm and a die having a columnar hole with a diameter of 10.8 mm.

FIG. 13 shows contour diagrams each illustrating the stress distribution inside a metal sheet in the middle of the processing, calculated by the finite element method. As shown in FIG. 13, with the processing apparatus for the inventive examples, the region pushed by the inclined portion was under high pressure, and a stress concentration zone was produced that extended from the shoulder of the die, parallel to the inclined portion.

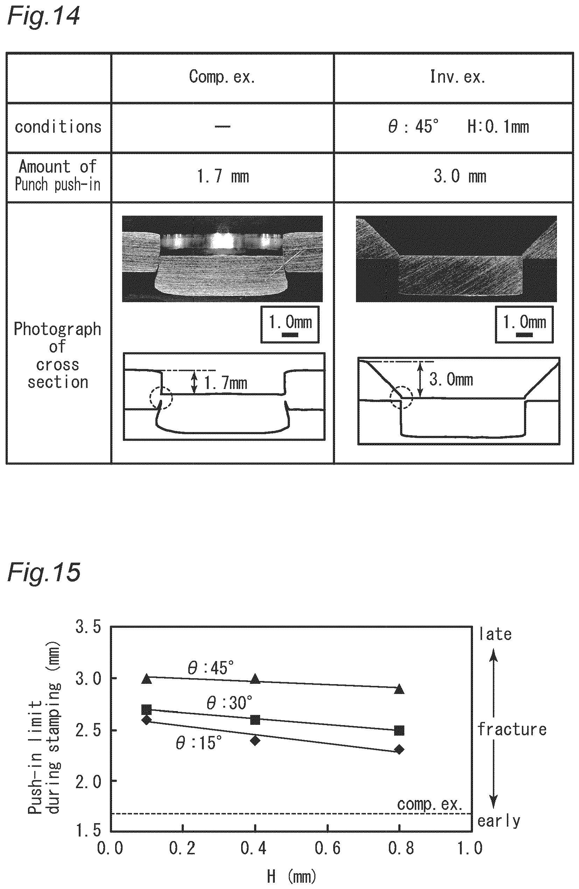

FIG. 14 shows photographs each showing a cross section of a metal sheet immediately before fracture. FIG. 14 shows that, if processing was done by the processing apparatus for the inventive examples, the time at which cracking occurred was later than when processing was done by the processing apparatus for the comparative examples (i.e., cracking did not occur until the punch was pushed in deeper).

FIG. 15 is a graph showing the relationship between the angle θ and height H and the push-in limit during stamping. The push-in limit during stamping is the amount of push-in by the punch immediately before the metal sheet is fractured; a larger push-in limit during stamping means a later time at which the metal sheet is fractured. FIG. 15 shows that the larger the angle θ or the smaller the height H, the larger the push-in limit during stamping.

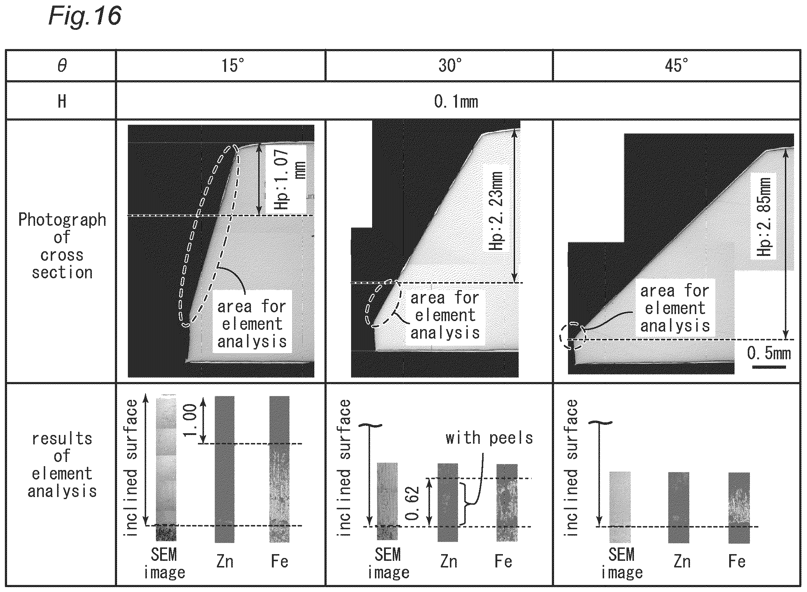

FIG. 16 shows photographs each showing a cross section of a metal sheet after processing, as well as results of element analysis of the edge surface. "Hp" in FIG. 16 means the height of the portion of the edge surface that has a remaining plating layer thereon (hereinafter referred to as "remaining plating height Hp"). The remaining plating height Hp was determined by measuring the edge surface of the metal sheet with energy-distribution X-ray analysis equipment (EDX) and determining the distributions of Zn and Fe on the edge surface. A metal sheet processed by a punch including an inclined portion with an angle θ of 30° had some of the plating layer peeled off near the lower end of the inclined surface. In a metal sheet processed by a punch including an inclined portion with an angle θ of 45°, the plating layer remained all the way to the lower end of the inclined surface, although intermittently.

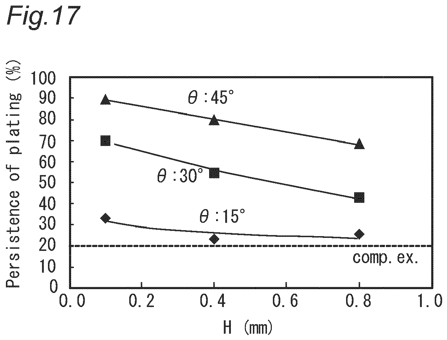

FIG. 17 is a graph showing the relationship between the angle θ and height H and the persistence of plating. The persistence of plating is the remaining plating height Hp divided by the sheet thickness. FIG. 17 shows a tendency that the larger the angle θ or the smaller the height H, the higher the persistence of plating. It is to be noted that the persistence of plating on a metal sheet processed by the processing apparatus for the comparative examples was 20 % at the maximum.

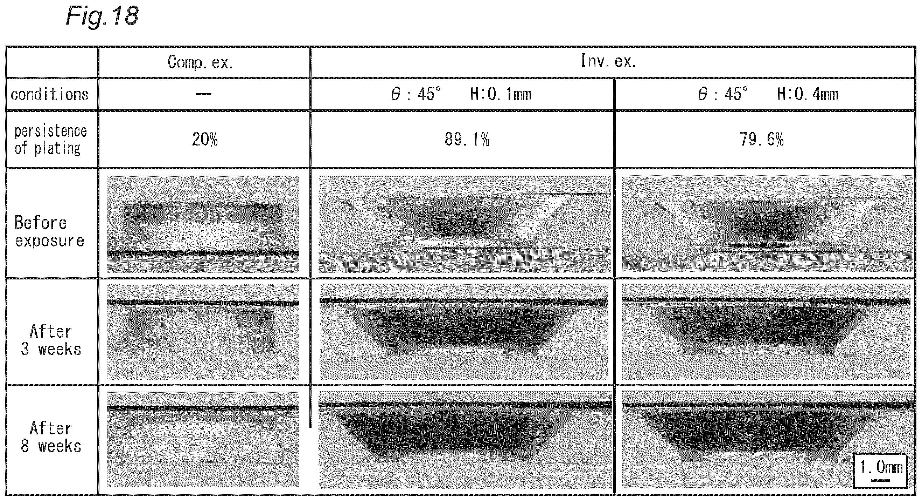

FIG. 18 shows photographs of metal sheets before and after atmospheric corrosion testing. The atmospheric corrosion testing was conducted by cutting a metal sheet in halves, applying a rust-preventive paint to the edge surfaces other than the surface to be evaluated (i.e., edge surface formed by stamping), and then placing the metal sheet outdoors. Each of the metal sheets processed by the processing apparatus for the comparative examples had large, conspicuous regions of red rust on the fracture surface three weeks after the initiation of exposure. In contrast, in the case of the metal sheets processed by the processing apparatus for the inventive examples, a small amount of red rust was produced three weeks after the initiation of exposure for an example with a height H of 0.4 mm and eight weeks after the initiation of exposure for an example with a height H of 0.1 mm, although in narrow regions and difficult to observe visually.

Next, a processing apparatus representing the construction of the processing apparatus 50 (FIG. 11) was used to perform shearing to cut a metal sheet along a straight line. The clearance CL between the end face 511 of the punch 51 and the end face 521 of the die 52 was 0.05 mm. Trial production was performed while the angle θ was changed to 15°, 30° and 45° and the height H was changed to 0.1 mm, 0.4 mm and 0.8 mm. The workpiece used was a Zn-Al-Mg-based plated steel sheet identical with that for stamping. For comparative examples, a shearing die assembly with vertical side faces (with a clearance of 0.4 mm) was used to perform shearing to cut a metal sheet along a straight line.

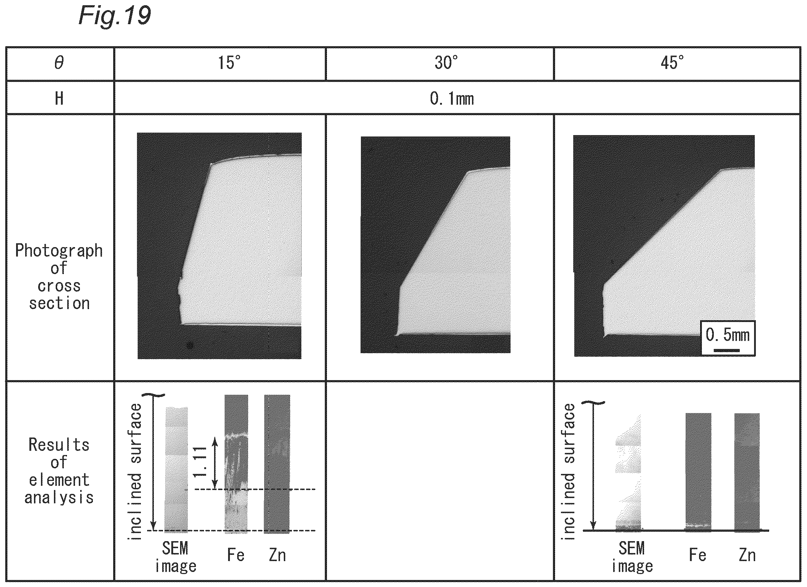

FIG. 19 shows photographs each showing a cross section of a metal sheet after processing, as well as results of element analysis of the edge surface. In a metal sheet processed by a punch including an inclined portion with an angle θ of 45°, the plating layer remained all the way to the lower end of the inclined surface.

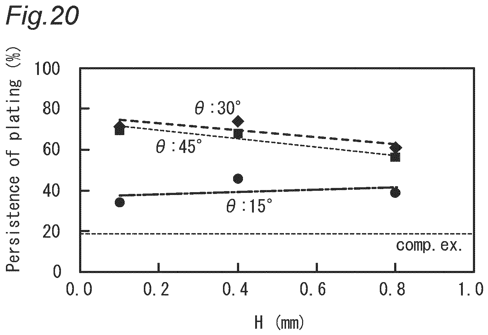

FIG. 20 is a graph showing the relationship between the angle θ and height H and the persistence of plating. It is to be noted that the persistence of plating of a metal sheet processed by the processing apparatus for the comparative examples was 18 % at the maximum.

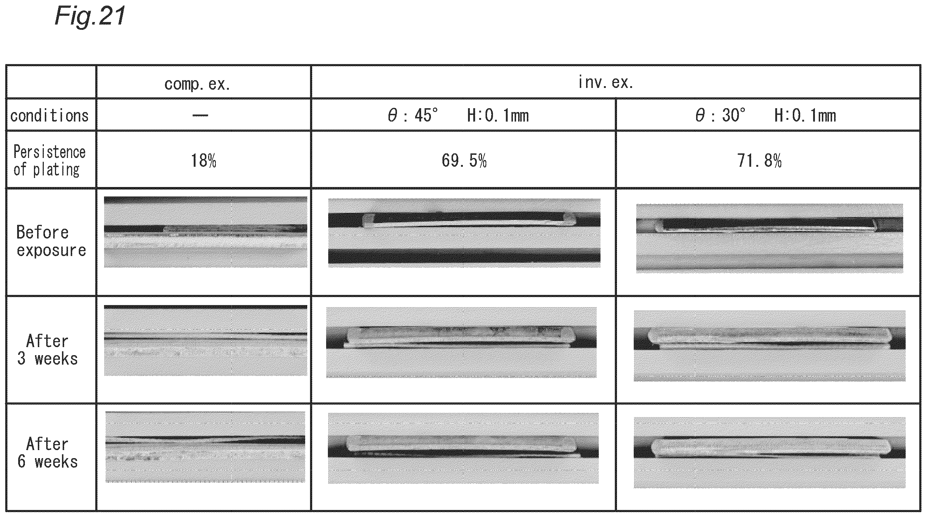

FIG. 21 shows photographs of metal sheets before and after atmospheric corrosion testing. Each of the metal sheets processed by the processing apparatus for the comparative examples had red rust on the fracture surface six weeks after the initiation of exposure. In contrast, in the metal sheets processed by the processing apparatus for the inventive examples, no red rust was produced as of six weeks after the initiation of exposure.

Embodiments of the present invention have been described. The above-described embodiments are merely illustrative examples useful for carrying out the present invention. Thus, the present invention is not limited to the above-described embodiments, and the above-described embodiments, when carried out, may be modified as appropriate within the scope of the invention.

### REFERENCE SIGNS LIST

10: metal sheet
11: first portion (metallic member)
111: inclined surface
112: cut surface
112a: shear surface
112b: fracture surface
12: second portion
13: first portion
14: second portion (metallic member)
141: inclined surface
142: cut surface
142a: shear surface
142b: fracture surface
15: metallic member
20, 30, 40, 50: processing apparatus
21, 31, 51: punch
211, 311, 511: end face
212, 312, 512: side face
212a, 512a: inclined portion
212b, 512b: extreme end portion
22, 32, 52: die
221, 321, 521: end face
222, 322, 522: side face
322a: inclined surface
322b: extreme end portion

## Claims

1. A processing apparatus including a punch and a die to be positioned on one side and another side of a workpiece constituted by a metal sheet, the one and the other sides being arranged in a sheet-thickness direction, the processing apparatus adapted to shear the metal sheet by moving at least one of the punch and the die in the sheet-thickness direction such that the punch and the die are located closer to each other,
wherein:
each of the punch and the die includes an end face and a side face;
the punch and the die are positioned such that the end face of the punch and the end face of the die do not overlap in plan view;
at least one of the side face of the punch and the side face of the die includes an inclined portion providing a surface inclined to face the metal sheet and shaped to overlap the other one of the punch and the die in plan view; and
the surface provided by the inclined portion and the sheet-thickness direction form an angle not smaller than 15°.

2. The processing apparatus according to claim 1, wherein the at least one of the side face of the punch and the side face of the die includes, in addition to the inclined portion, an extreme end portion contiguous with the inclined portion and located at an end adjacent to the metal sheet as determined along the sheet-thickness direction and providing a surface generally parallel to the sheet-thickness direction.

3. The processing apparatus according to claim 2, wherein a dimension of the extreme end portion as measured in the sheet-thickness direction is not larger than 50 % of a sheet thickness of the metal sheet.

4. The processing apparatus according to any one of claims 1 to 3, wherein the surface provided by the inclined portion and the sheet-thickness direction form an angle of 15 to 60°.

5. A method of manufacturing a metallic member comprising using the processing apparatus according to any one of claims 1 to 3 to shear a metal sheet having a plating layer on a surface.

6. The method of manufacturing a metallic member according to claim 5, wherein the metal sheet having a plating layer on the surface is a plated steel sheet.

7. The method of manufacturing a metallic member according to claim 6, wherein the plating layer is a Zn-based plating layer.

8. A metallic member formed from a metal sheet having a plating layer on a surface,
wherein an edge surface includes one inclined surface having a dimension in a sheet-thickness direction not smaller than 60 % of a sheet thickness, the inclined surface and the sheet-thickness direction forming an angle not smaller than 15°,
at least a portion of the inclined surface being covered with the plating layer.

9. The metallic member according to claim 8, wherein the edge surface having an inclined surface is formed by shearing a workpiece constituted by a surface-plated metal sheet,
the plating layer covering at least a portion of the inclined surface is derived from the workpiece.

10. The metallic member according to claim 8 or 9, further comprising a cut surface contiguous with the inclined surface and located at one of ends of the metallic member as determined along the sheet-thickness direction at which a size of the member is increased by the inclined surface, and including at least one of a shear surface and a fracture surface.

11. The metallic member according to claim 10, wherein:
the cut surface includes both the shear surface and the fracture surface; and
the fracture surface is not covered with the plating layer.

12. The metallic member according to claim 8 or 9, wherein the metal sheet having a plating layer on the surface is a plated steel sheet.

13. The metallic member according to claim 12, wherein the plating layer is a Zn-based plating layer.
